# EUROPÄISCHE PATENTSCHRIFT

(11) **EP 3 129 616 B1**
(45) Veröffentlichungstag und Bekanntmachung des Hinweises auf die Patenterteilung: **21.08.2019**
(21) Anmeldenummer: 15708144.9
(22) Anmeldetag: 24.02.2015
(51) Int. Cl.: F01L 1/46, F01L 13/00, F01L 1/344

(54) **VERFAHREN UND VORRICHTUNG ZUM ÜBERPRÜFEN EINES VENTILTRIEBS BEI EINEM VERBRENNUNGSMOTOR**
METHOD AND DEVICE FOR INSPECTING A VALVE DRIVE IN AN INTERNAL COMBUSTION ENGINE
PROCÉDÉ ET DISPOSITIF DE VÉRIFICATION DU FONCTIONNEMENT DES SOUPAPES D'UN MOTEUR À COMBUSTION INTERNE

(30) Priorität: 11.04.2014 DE 102014207016
(43) Veröffentlichungstag der Anmeldung: 15.02.2017
(73) Patentinhaber: Bayerische Motoren Werke Aktiengesellschaft, 80809 München (DE)
(72) Erfinder: SCHÖNING, Sebastian, 13156 Berlin (DE)
(86) Internationale Anmeldenummer: PCT/EP2015/053777
(87) Internationale Veröffentlichungsnummer: WO 2015/154909

(56) Entgegenhaltungen:
- EP-A1- 2 192 381
- DE-A1- 10 018 060
- DE-A1-102005 004 248
- JP-A- 2009 197 606
- US-A1- 2007 017 461
- US-A1- 2009 123 032

## Beschreibung

Die Erfindung betrifft ein Verfahren zum Überprüfen eines Ventiltriebs, insbesondere zum Ermitteln einer Ventilposition eines Ventils eines Verbrennungsmotors, sowie eine entsprechende Vorrichtung.

Bei der Herstellung von Verbrennungsmotoren ist es erforderlich den zusammengesetzten Motor (Vollmotor) einem Funktionstest zu unterziehen, um einen Ventiltrieb, insbesondere die Öffnungs- und Schließzeitpunkte der Einlass- und Auslassventile zu prüfen und die Steuerzeiten zu messen. Hierbei wird der Verbrennungsmotor beispielsweise dem sogenannten "Kalttest" unterzogen, bei dem der Verbrennungsmotor über einen Schleppantrieb angetrieben wird. Alternativ sind Steuerzeitenmessvorrichtungen bekannt, die mittels taktiler Messung arbeiten.

Beide Messverfahren setzen den Einsatz entsprechender Vorrichtungen voraus. Diese sind jedoch üblicherweise sehr groß und teuer und erfordern eine regelmäßige Kalibrierung. Insbesondere bei sehr engen Zylinderköpfen ist eine Verwendung der Steuerzeitenmessvorrichtung aufgrund der taktilen Messung am Vollmotor nur schwer möglich.

Aus der DE 10 2005 004 248 A1 ist daher ein optisches Messverfahren bekannt, um an einem Verbrennungsmotor den Ventiltrieb bzw. die Stellung eines Ventils zu ermitteln, indem Licht dem jeweiligen Ventil von einer zum Ventilschaft weisenden Seite zugeführt wird. Im Brennraum ist ein lichtsensitives Messorgan angeordnet, welches bei Öffnung der Ventile einen Lichtdurchtritt aus dem Brennraum bzw. beim Schließen der Ventile eine Lichtunterbrechung erfassen kann.

Dieses optische Verfahren weist die Eigenschaft auf, dass bei einem Verbrennungsmotor mit mehreren Ventilen pro Brennraum nur das Öffnen des ersten Ventils erfasst werden kann. Sobald das erste Ventil geöffnet ist, gelangt Licht über das geöffnete Ventil in den Brennraum und wird dort erfasst. Öffnet ein zweites Ventil noch während das erste Ventil geöffnet ist, so gelangt zusätzlich zu dem Lichteintritt über das erste Ventil auch über das zweite Ventil Licht in den bereits erleuchteten Brennraum. Das dort angeordnete Messorgan kann somit keine Veränderung erfassen. Folglich lässt das Verfahren lediglich die Erfassung des erstmaligen Lichteintritts nach Öffnen des ersten Ventils zu, so dass ein Öffnungszeitpunkt des zweiten Ventils somit nicht bestimmt werden kann.

Aufgabe der Erfindung ist es also Öffnungs- und Schließzeitpunkte einzelner Ventile unabhängig voneinander erfassbar zu machen.

Diese Aufgabe wird gelöst mittels der Verfahren gemäß Anspruch 1 oder 2 sowie einer Vorrichtung mit den Merkmalen des Patenanspruchs 7.

Vorteilhafte Ausführungsformen ergeben sich aus den jeweils abhängigen Patentansprüchen.

Demnach wird ein Verfahren zum Ermitteln einer Ventilposition eines Ventils eines Verbrennungsmotors mit einer Mehrzahl von Ventilen bereitgestellt, mit den folgenden Schritten:
- Beleuchten eines Brennraums des Verbrennungsmotors,
- Erfassen eines aus dem beleuchteten Brennraum austretenden Lichts auf einer dem Brennraum abgewandten Seite des zu ermittelnden Ventils,
- Bestimmen der Ventilposition des zu ermittelnden Ventils mittels des erfassten Lichts.

Vorzugsweise wird das Verfahren zum Ermitteln einer jeweiligen Ventilposition mindestens zweier Ventile eines Verbrennungsmotors mit einer Mehrzahl von Ventilen genutzt, so dass sich folgende Schritte ergeben:
- Beleuchten eines Brennraums des Verbrennungsmotors,
- Erfassen eines aus dem beleuchteten Brennraum austretenden Lichts auf einer jeweils dem Brennraum abgewandten Seite der zu ermittelnden Ventile,
- Bestimmen der jeweiligen Ventilposition der mindestens zwei zu ermittelnden Ventile anhand des jeweils erfassten Lichts.

In jedem Fall wird also der Brennraum des Verbrennungsmotors mit einer Lichtquelle beleuchtet. Solange das zu bestimmende Ventil geschlossen ist, dringt kein Licht durch das Ventil aus dem Brennraum. Die Schließstellung des Ventils kann somit eindeutig identifiziert werden. Sobald nun das Ventil öffnet, tritt Licht aus dem Brennraum aus und kann auf der dem Brennraum abgewandten Seite des Ventils erfasst werden. Dies ermöglicht auf besonders präzise Weise die aktuelle Stellung des Ventils zu ermitteln.

Hierbei ist eine Stellung der anderen Ventile ohne Einfluss, so dass sich auch die Positionen von mehr als einem Ventil unabhängig voneinander bestimmen lassen. Es wird jeweils nur dann ein aus dem Brennraum austretendes Licht auf der jeweils dem Brennraum abgewandten Ventilseite erfasst, wenn das zugehörige Ventil tatsächlich geöffnet wird. Die Stellung des oder der anderen Ventile beeinflusst die Messung somit nicht, so dass für die individuelle Bestimmung der jeweiligen Ventilposition sich kein Unterschied ergibt, ob die anderen Ventile geöffnet oder geschlossen sind. Zusammenfassend bietet das Verfahren die Möglichkeit jede Ventilposition separat zu ermitteln.

Des Weiteren kann der Schritt des Erfassens des austretenden Lichts kontinuierlich oder diskontinuierlich erfolgt. Dies bedeutet, dass das Erfassen des Lichts ein kontinuierliches Messen einer Lichtintensität umfasst und somit jede Veränderung sofort in ein entsprechendes Signal zur geeigneten Weiterverarbeitung umgewandelt werden kann. Bei einer diskontinuierlichen Erfassung erfolgt eine Messung nur zu definierten Zeitpunkten bzw. in definierten Zeitintervallen.

Vorzugsweise umfasst der Schritt des Erfassens des austretenden Lichts also ein Erfassen der Änderung der Lichtintensität und/oder einer (vollständige) Unterbrechung des aus dem Brennraum austretenden Lichts. Die Unterbrechung des erfassten Lichts kennzeichnet in eindeutiger Weise, dass sich das Ventil in der Schließstellung befindet und eine Dichtwirkung erzielt wird.

Die Messung der Lichtintensität kann dahingehend genutzt werden zwischen der Schließstellung und der geöffneten Stellung zu unterscheiden. Zusätzlich können Zwischenwerte für die zwischen der Schließstellung und der geöffneten Stellung auftretenden Werte der Lichtintensität unterschieden werden, um auf diese Weise ein oder mehrere Zwischenpositionen des Ventils zu ermitteln.

Gemäß einer Ausführungsform ist jedem Ventil ein eigener Lichtsensor zugeordnet und das Verfahren umfasst außerdem einen Schritt des Zuordnens des mittels des mindestens einen Lichtsensors erfassten Lichts zu dem jeweiligen dem Lichtsensor zugeordneten Ventil.

Dies bietet die Möglichkeit, eine individuelle Stellung jedes der zu messenden Ventile eindeutig zu ermitteln. Dies erfolgt dadurch, dass das Licht aus dem Brennraum nur dann zu dem jeweiligen Lichtsensor gelangen kann, wenn das zugehörige Ventil tatsächlich geöffnet wird. Eine Beeinflussung durch ein Öffnen oder ein Schließen eines anderen Ventils wird somit zu jeder Zeit wirkungsvoll verhindert.

Des Weiteren kann das Verfahren außerdem einen Schritt des Erfassens eines Kurbelwinkels einer Kurbelwelle des Verbrennungsmotors umfasst.

Die Information über den Kurbelwinkel kann dazu verwendet werden, um die erfasste Ventilposition der zugehörigen Drehposition des Motors zuzuordnen.

Zur Durchführung des Verfahrens kann der Verbrennungsmotor außerdem mittels eines separaten Antriebs geschleppt angetrieben werden. Dies kann beispielsweise vor oder während des sogenannten Kalttests erfolgen.

Mit Hilfe des beschriebenen Verfahrens lassen sich somit bei bekannter Nockenerhebungskurve ventilspezifisch die Steuerzeiten und ein Ventilspiel am zusammengebauten Vollmotor testen.

Des Weiteren wird eine Vorrichtung zum Ermitteln einer Ventilposition mindestens eines Ventils "eines Verbrennungsmotors beschrieben, mit einem Brennraum des Verbrennungsmotors, sowie einer Lichtquelle, mindestens einem Lichtsensor zum Erfassen des Lichts der Lichtquelle, dadurch gekennzeichnet, dass die Lichtquelle zum Beleuchten des Brennraums ausgebildet ist und der mindestens eine Lichtsensor zum Erfassen des aus dem beleuchteten Brennraums austretenden Lichts auf einer dem Brennraum abgewandten Seite des mindestens einen Ventils ausgebildet ist.

Beispielsweise umfasst die Lichtquelle ein Leuchtmittel, insbesondere eine Glühlampe, ein LED-Leuchtmittel oder einen Laser. Die Lichtquelle ist beispielsweise an Stelle der Zündkerze oder des Glühstifts montiert, um den Innenraum des Brennraums zu beleuchten.

Vorzugsweise ist der mindestens eine Lichtsensor auf der dem Brennraum abgewandten Seite des mindestens einen Ventils angeordnet ist, insbesondere in einem dem mindestens einen Ventil zugeordneten Einlass- oder Auslasskanal angeordnet.

Dies bedeutet, dass der Lichtsensor entweder innerhalb der Einlass- oder Auslasskanäle angeordnet sein kann oder derart angeordnet ist, dass dieser zumindest die Lichtintensität innerhalb des Einlass- oder Auslasskanals erfassen kann. Beispielsweise kann der Lichtsensor hierzu in den jeweiligen Kanal einmünden.

Gemäß einer bevorzugten Ausführungsform umfasst die Anordnung eine Mehrzahl von Lichtsensoren, wobei jeder Lichtsensor einem eigenen Arm eines geteilten Einlass- oder Auslasskanals zugeordnet ist.

Zusätzlich kann die Anordnung einen Schleppantrieb zum geschleppten Antrieb des Verbrennungsmotors umfassen.

Die Erfindung wird nachfolgend anhand eines Ausführungsbeispiels unter Bezugnahme auf die Figuren näher beschrieben. Es zeigen:
Fig. 1 eine schematische Teil-Draufsicht auf eine Vorrichtung gemäß der Beschreibung, und
Fig. 2 eine geschnittene, teilweise Seitenansicht der Vorrichtung gemäß der Beschreibung.

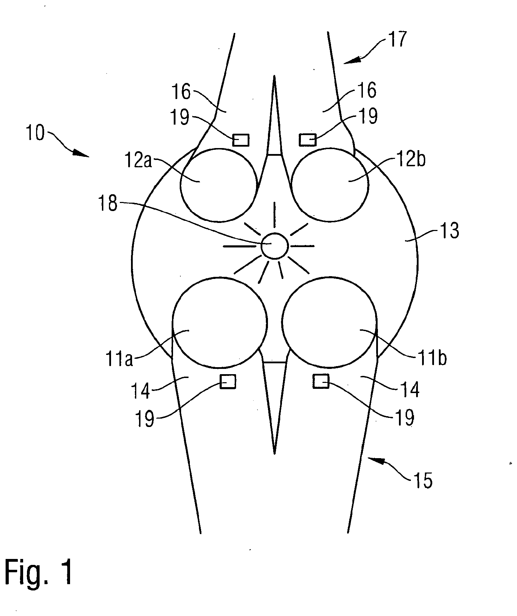

Fig. 1 zeigt eine schematische Draufsicht auf eine Vorrichtung 10 (lediglich teilweise dargestellt) zur Durchführung eines Funktionstests eines montierten Verbrennungsmotors mit einem oder mehreren Zylindern (angedeutet ist lediglich ein Zylinder), insbesondere zum Ermitteln einer Ventilposition der Ventile 11a,b,12a,b des Verbrennungsmotors. Dieser weist einen Brennraum 13 auf, in den zwei verzweigte Arme 14 eines Einlasskanals 15 über jeweils eines der Einlassventile 11a,b einmünden. Zwei Arme 16 des Auslasskanals 17 führen über die zwei Auslassventile 12a,b aus dem Brennraum 13 heraus und vereinen sich in ihrem weiteren Verlauf zu dem gemeinsamen Auslasskanal 17. Innerhalb des Brennraums 13 ist eine Lichtquelle 18 zum Beleuchten des Brennraums 13 angeordnet.

Des Weiteren sind vier Lichtsensoren 19 zum Erfassen des Lichts der Lichtquelle 18 vorgesehen, die jeweils einem der vier Ventile 11a,b 12a,b zugeordnet und zum Erfassen des aus dem beleuchteten Brennraums 13 austretenden Lichts auf einer dem Brennraum 13 abgewandten Seite des jeweiligen Ventils 11a,b 12a,b ausgebildet sind.

Hierzu sind die Lichtsensoren 19 auf der dem Brennraum 13 abgewandten Seite des jeweiligen Ventils 11a,b 12a,b angeordnet. In der dargestellten Ausführungsform ist jeder Lichtsensor 19 in jeweils einem eigenen Arm 14,16 des geteilten Einlasskanals 15 bzw. Auslasskanals 17 angeordnet, der dem zugehörigen Ventil 11a,b 12a,b zugeordnet ist. Die Arme 14, 16 sind durch ihre Wandung optisch voneinander getrennt, so dass ein Lichteintritt aus dem Brennraum 13 in einen der Arme 14,16 nicht von dem Lichtsensor 19 des benachbarten Arms 14,16 des Einlass- 15 bzw. Auslasskanals 17 erfasst wird. Auf diese Weise ist eine separate, ventilspezifische Erfassung des aus dem Brennraum 13 austretenden Lichts möglich, wodurch eine ventilspezifische Ventilstellung ermittelt werden kann.

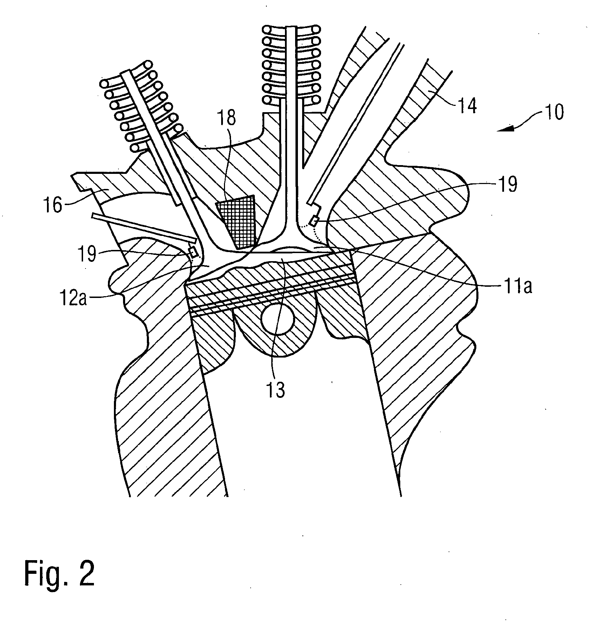

Fig. 2 zeigt die Vorrichtung 10 in einer geschnittenen Seitenansicht mit einem Arm 14 des geteilten Einlasskanals 15 und einem Arm 16 des geteilten Auslasskanals 17. Jedem Arm 14,16 ist jeweils ein Ventil 11a,12a zugeordnet, das zumindest zwischen einer geöffneten Stellung und einer Schließstellung bewegbar ist.

Auf der jeweils dem Brennraum 13 abgewandten Seite der Ventile 11a,12a (also deren Rückseite) ist je ein Lichtsensor 19 angeordnet. Die Anordnung der Lichtsensoren 19 in Fig. 2 ist lediglich schematisch zu verstehen. Die Lichtsensoren 19 sind zumindest derart anzuordnen, dass die Lichtsensoren 19 das aus dem Brennraum 13 austretende Licht erfassen können. Beispielsweise können die Lichtsensoren 19 hierzu innerhalb des Einlasskanals 15 bzw. des Auslasskanals 17 angeordnet sein. Ebenso können die Lichtsensoren 19 in einer Wandung der Kanäle 15,17 angeordnet und in den jeweiligen Kanal 15,17 gerichtet sein.

Die Lichtquelle 18 (lediglich schematisch angedeutet) kann beispielsweise in der dargestellten bevorzugten Ausführungsform anstelle einer Zündkerze in deren Aufnahme eingesetzt sein, so dass auf umfangreiche Anpassungsmaßnahmen des Motors verzichtet werden kann. Selbstverständlich können stattdessen auch andere geeignete Aufnahmen vorgesehen werden. Auch kann eines der Ventile 11a,b 12a,b entfernt und an dessen Stelle eine Lichtquelle zur Beleuchtung des Brennraums 13 vorgesehen werden.

## Patentansprüche

1. Verfahren zum Ermitteln einer Ventilposition eines Ventils (11a,b 12a,b) eines Verbrennungsmotors mit einer Mehrzahl von Ventilen (11a,b 12a,b) mittels zu erfassendem Licht, **dadurch gekennzeichnet, dass** das Verfahren die folgenden Schritte umfasst:
- Beleuchten eines Brennraums (13) des Verbrennungsmotors,
- Erfassen eines aus dem beleuchteten Brennraum (13) austretenden Lichts auf einer dem Brennraum (13) abgewandten Seite des zu ermittelnden Ventils (11a,b 12a,b),
- Bestimmen der Ventilposition des zu ermittelnden Ventils (11a,b 12a,b) mittels des erfassten Lichts.

2. Verfahren zum Ermitteln einer jeweiligen Ventilposition mindestens zweier Ventile (11a,b 12a,b) eines Verbrennungsmotors mit einer Mehrzahl von Ventilen (11a,b 12a,b) mittels zu erfassendem Licht, **dadurch gekennzeichnet, dass** das Verfahren die folgenden Schritte umfasst:
- Beleuchten eines Brennraums (13) des Verbrennungsmotors,
- Erfassen eines aus dem beleuchteten Brennraum (13) austretenden Lichts auf einer jeweils dem Brennraum (13) abgewandten Seite der zu ermittelnden Ventile (11a,b 12a,b),
- Bestimmen der jeweiligen Ventilposition der mindestens zwei zu ermittelnden Ventile (11a,b 12a,b) anhand des jeweils erfassten Lichts.

3. Verfahren nach einem der Ansprüche 1 oder 2, **dadurch gekennzeichnet, dass** der Schritt des Erfassens des austretenden Lichts kontinuierlich oder diskontinuierlich erfolgt.

4. Verfahren nach einem der Ansprüche 1 bis 3, **dadurch gekennzeichnet, dass** der Schritt des Erfassens des austretenden Lichts ein Erfassen einer Änderung einer Lichtintensität und/oder einer Unterbrechung des aus dem Brennraum (13) austretenden Lichts umfasst.

5. Verfahren nach einem der Ansprüche 1 bis 4, **dadurch gekennzeichnet, dass** das Verfahren außerdem einen Schritt des Erfassens eines Kurbelwinkels einer Kurbelwelle des Verbrennungsmotors umfasst.

6. Verfahren nach einem der Ansprüche 1 bis 5, **dadurch gekennzeichnet, dass** der Verbrennungsmotor mittels eines separaten Antriebs geschleppt angetrieben wird.

7. Vorrichtung zum Ermitteln einer Ventilposition mindestens eines Ventils eines Verbrennungsmotors, mit einem Brennraum (13) des Verbrennungsmotors, sowie einer Lichtquelle (18), mindestens einem Lichtsensor (19) zum Erfassen des Lichts der Lichtquelle (18), **dadurch gekennzeichnet, dass** die Lichtquelle (18) zum Beleuchten des Brennraums (13) ausgebildet ist und der mindestens eine Lichtsensor (19) zum Erfassen des aus dem beleuchteten Brennraum (13) austretenden Lichts auf einer dem Brennraum (13) abgewandten Seite des mindestens einen Ventils (11a,b 12a,b) ausgebildet ist.

8. Vorrichtung nach Anspruch 7, **dadurch gekennzeichnet, dass** der mindestens eine Lichtsensor (19) auf der dem Brennraum (13) abgewandten Seite des mindestens einen Ventils (11a,b 12a,b) angeordnet ist, insbesondere in einem dem mindestens einen Ventil (11a,b 12a,b) zugeordneten Einlass- (15) oder Auslasskanal (17) angeordnet ist.

9. Vorrichtung nach einem der Ansprüche 7 bis 8, **dadurch gekennzeichnet, dass** die Anordnung eine Mehrzahl von Lichtsensoren (19) umfasst, wobei jeder Lichtsensor (19) einem eigenen Arm (14,16) eines geteilten Einlass- (15) oder Auslasskanals (17) zugeordnet ist.

10. Vorrichtung nach einem der Ansprüche 7 bis 9, **dadurch gekennzeichnet, dass** die Anordnung einen Schleppantrieb zum geschleppten Antrieb des Verbrennungsmotors umfasst.

## Claims

1. A method for ascertaining a valve position of a valve (11a,b 12a,b) of an internal combustion engine having a plurality of valves (11a,b 12a,b) by means of light which is to be detected, **characterised in that** the method comprises the following steps:
- illuminating a combustion chamber (13) of the internal combustion engine,
- detecting a light emerging from the illuminated combustion chamber (13) on a side of the valve (11a,b 12a,b) to be ascertained which is remote from the combustion chamber (13),
- determining the valve position of the valve (11a,b 12a,b) to be ascertained by means of the detected light.

2. A method for ascertaining a respective valve position of at least two valves (11a,b 12a,b) of an internal combustion engine having a plurality of valves (11a,b 12a,b) by means of light which is to be detected, **characterised in that** the method comprises the following steps:
- illuminating a combustion chamber (13) of the internal combustion engine,
- detecting a light emerging from the illuminated combustion chamber (13) on a side of the valves (11a,b 12a,b) to be ascertained which is remote in each case from the combustion chamber (13),
- determining the respective valve position of the at least two valves (11a,b 12a,b) to be ascertained using the light detected in each case.

3. A method according to one of Claims 1 or 2, **characterised in that** the step of detecting the emerging light takes place continuously or discontinuously.

4. A method according to one of Claims 1 to 3, **characterised in that** the step of detecting the emerging light comprises detecting a change in a light intensity and/or an interruption in the light emerging from the combustion chamber (13).

5. A method according to one of Claims 1 to 4, **characterised in that** the method furthermore comprises a step of detecting a crank angle of a crankshaft of the internal combustion engine.

6. A method according to one of Claims 1 to 5, **characterised in that** the internal combustion engine is driven with a cranking action by means of a separate drive.

7. A device for ascertaining a valve position of at least one valve of an internal combustion engine, with a combustion chamber (13) of the internal combustion engine, and also with a light source (18), at least one light sensor (19) for detecting the light of the light source (18), **characterised in that** the light source (18) is designed for illuminating the combustion chamber (13) and the at least one light sensor (19) is designed for detecting the light emerging from the illuminated combustion chamber (13) on a side of the at least one valve (11a,b 12a,b) remote from the combustion chamber (13).

8. A device according to Claim 7, **characterised in that** the at least one light sensor (19) is arranged on the side of the at least one valve (11a,b 12a,b) remote from the combustion chamber (13), especially is arranged in an inlet duct (15) or outlet duct (17) associated with the at least one valve (11a,b 12a,b).

9. A device according to one of Claims 7 to 8, **characterised in that** the arrangement comprises a plurality of light sensors (19), wherein each light sensor (19) is associated with a separate arm (14, 16) of a divided inlet duct (15) or outlet duct (17).

10. A device according to one of Claims 7 to 9, **characterised in that** the arrangement comprises a cranking drive for driving the internal combustion engine with a cranking action.

## Revendications

1. Procédé permettant d'évaluer la position d'une soupape (11a,b, 12a,b) d'un moteur à combustion interne ayant un ensemble de soupapes (11a,b 12a,b) par détection de lumière,
**caractérisé en ce que**
le procédé comprend les étapes suivantes consistant à :
- éclairer une chambre de combustion (13) du moteur à combustion interne,
- détecter la lumière sortant de la chambre de combustion (13) éclairée sur le côté opposé à la chambre de combustion (13) de la soupape (11a,b 12a,b) à évaluer,
- déterminer la position de la soupape (11a,b 12a,b) à évaluer au moyen de la lumière détectée.

2. Procédé permettant d'évaluer la position respective d'au moins deux soupapes (11a,b 12a,b) d'un moteur à combustion interne ayant un ensemble de soupapes (11a,b 12a,b) par détection de lumière,
**caractérisé en ce que**
le procédé comprend les étapes suivantes consistant à :
- éclairer une chambre de combustion (13) du moteur à combustion interne,
- détecter la lumière sortant de la chambre de combustion (13) éclairée sur le côté des soupapes (11a,b 12a,b) à évaluer respectivement opposé à la chambre de combustion (13),
- déterminer la position respective des deux soupapes (11a,b 12a,b) à évaluer sur le fondement de la lumière respectivement détectée.

3. Procédé conforme à l'une des revendications 1 et 2,
**caractérisé en ce que**
l'étape d'évaluation de la lumière sortant est mise en oeuvre de manière continue ou discontinue.

4. Procédé conforme à l'une des revendications 1 à 3,
**caractérisé en ce que**
l'étape d'évaluation de la lumière sortant comporte l'évaluation d'une modification de l'intensité de la lumière et/ou une interruption de la lumière sortant de la chambre de combustion (13).

5. Procédé conforme à l'une des revendications 1 à 4,
**caractérisé en ce qu'**il comporte en outre
une étape consistant à saisir l'angle du vilebrequin du moteur à combustion interne.

6. Procédé conforme à l'une des revendications 1 à 5,
**caractérisé en ce que**
le moteur à combustion interne est tracté au moyen d'un entraînement séparé.

7. Dispositif permettant d'évaluer la position d'au moins une soupape d'un moteur à combustion interne avec une chambre de combustion (13) du moteur à combustion interne ainsi qu'une source de lumière (18), et au moins un détecteur de lumière (19) pour détecter la lumière de la source de lumière (18),
**caractérisé en ce que**
la source de lumière (18) est réalisée pour éclairer la chambre de combustion (13) et le détecteur de lumière (19) est réalisé pour détecter la lumière sortant de la chambre de combustion (13) éclairée sur le côté de la soupape (11a,b 12a,b) opposé à la chambre de combustion (13).

8. Dispositif conforme à la revendication 7,
**caractérisé en ce que**
le détecteur de lumière (19) est monté sur le côté de la soupape (11a,b 12a,b) opposé à la chambre de combustion (13) en particulier dans un canal d'entrée (15) ou de sortie (17) associé à la soupape (11a,b 12a,b).

9. Procédé conforme à l'une des revendications 7 à 8,
**caractérisé en ce que**
le montage comporte plusieurs détecteurs de lumière, à chaque détecteur de lumière (19) étant associé un bras propre (14, 16) d'un canal d'entrée (15) ou de sortie (17) subdivisé.

10. Dispositif conforme à l'une des revendications 7 à 9,
**caractérisé en ce que**
le montage comporte un entraînement par traction du moteur à combustion interne.
